# EUROPEAN PATENT SPECIFICATION

(11) **EP 3 751 715 B1**
(45) Date of publication and mention of the grant of the patent: **20.07.2022**
(21) Application number: 19180263.6
(22) Date of filing: 14.06.2019
(51) Int. Cl.: H02M 3/158, H02J 7/00

(54) **CONTROL SYSTEM FOR A BATTERY SYSTEM**
STEUERUNGSSYSTEM FÜR EIN BATTERIESYSTEM
SYSTÈME DE COMMANDE POUR SYSTÈME DE BATTERIE

(43) Date of publication of application: 16.12.2020
(73) Proprietor: Samsung SDI Co., Ltd., Gyeonggi-do 17084 (KR)
(72) Inventor: Renato, Mandic, 8010 Graz (AT); Hofer, Maximilian, 8230 Hartberg (AT)
(74) Representative: Gulde & Partner

(56) References cited:
- EP-A1- 3 300 153
- US-A1- 2008 111 517
- US-B1- 6 215 290

## Description

### Field of the Invention

The present invention relates to a control system for a battery system, particularly a control system with improved redundancy for fulfilling high safety standards. The invention further relates to a battery system with such a control system, such as a high voltage battery system.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while highcapacity rechargeable batteries are used as the power supply for hybrid vehicles and the like. In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. One or more battery modules are mechanically and electrically integrated, equipped with a thermal management system and set up for communication with one or more electrical consumers in order to form a battery system.

For meeting the dynamic power demands of various electrical consumers connected to the battery system a static control of battery power output and charging is not sufficient. Thus, steady or intermittent exchange of information between the battery system and the controllers of the electrical consumers is required. This information includes the battery systems actual state of charge (SoC), potential electrical performance, charging ability and internal resistance as well as actual or predicted power demands or surpluses of the consumers.

For monitoring, controlling and/or setting of the aforementioned parameters a battery system usually comprises a battery management unit (BMU), a battery management system (BMS), and/or a battery system manager (BSM). Each of these control units may be realized as an integrated circuit (IC), a microcontroller (µC), an application specific integrated circuit (ASIC), or the like. Control units may be an integral part of the battery system and disposed within a common housing or may be part of a remote control module communicating with the battery system via a suitable communication bus. In both cases, the control unit communicates with the electrical consumers via a suitable communication bus, e.g. a CAN or SPI interface.

The electric engine of electric vehicles may be supplied by a high voltage battery system, e.g. a 48 V battery system. The 48 V battery system is connected to a 48 V board net that may comprise electronic control units (ECUs) powered by the 48 V battery system. The 48 V battery system is usually charged by a electric generator (combined starter generator). The electric vehicles may further comprise a 12 V board net that might be related to security relevant functions. Exemplarily, an ECU of a power steering system or antiskid system may be integrated in the 12 V board net. The 12 V board net may comprise a 12 V battery system, e.g. a lead-acid based battery, which may be charged by the starter generator via a DC/DC. Hence an electric vehicle according to the prior art usually comprises a 12 V battery system, a DC/DC converter and a 48 V battery system. As these electrical systems gain more importance in the operation of such vehicle, the availability of the components of the electric system becomes more important. Exemplarily, it shall be ensured that even if a failure occurs, e.g., in the high voltage battery system or the DCDC converter, a user should be able to operate the vehicle with limited functionality. Further, the security relevant functions as already set forth above have to met specific availability standards, such as e.g., ASIL B.

Most of the known solutions considering these availability requirements of the electric system mainly focus on the availability of the high voltage battery. However, the known solutions do not consider the functional safety of the DCDC converters under the availability aspect.

It is thus an objective of the present invention, to provide a control system for a battery system, particularly an improved DCDC converter for a battery system, which contributes to the functional availability of the battery system, and preferably fulfils ASIL B requirements.

The document EP3300153 A1 discloses a control system for a battery system comprising DCDC converters. Z

### Description of the Invention

The invention provides a control system for a battery system according to claim 1 and a battery system for an electric vehicle according to claim 11 comprising that control system. Preferred embodiments are defined in the dependent claims.

The objective of the invention is solved and the disadvantages of the prior art are overcome by the subject-matter of the present invention, i.e., by a control system, a battery system and a vehicle according to the appended claims.

An aspect of the invention relates to a control system for a battery system. The control system according to the invention comprises an N-phase DCDC converter with N single phase DCDC converters. In other words, the N-phase DCDC converter is established by connecting the N single phase DCDC converters, such that these single phase DCDC converters can be operated as a multi phase DCDC converter. Therefore, the N single phase DCDC converters are preferably set in parallel between an input node of the N phase DCDC converter and an output node of the N phase DCDC converter. Further preferred, each of the N single phase DCDC converters is configured to be activated at spaced intervals equal to 360°/N throughout a switching period. The control system of the present invention further comprises first microcontroller µC1 that is configured to control a first fraction N₁ of the N single phase DCDC converters. Particularly preferred, µC1 is configured to control the duty cycle of each of the N₁ single phase DCDC converters of the first fraction, i.e., to control the switching elements of each of these converters. The control system further comprises a second microcontroller µC2 that configured to control the remaining second fraction N₂ of the N single phase DCDC converters. Therein, the first fraction and the second fraction of the single phase DCDC converters sum up to the total of N single phase DCDC converters, i.e. N₁+N₂=N. Preferably, µC2 is configured to control the duty cycle of each of the N₂ single phase DCDC converters of the second fraction, i.e., to control the switching elements of each of these converters. Principally, each of µC1 and µC2 has a setup as prior art microcontrollers know for the control of N phase DCDC converters with the additional functions as described below. Although the invention is described with respect to two microcontrollers for the ease of description, the control system could be also realized with three or more microcontrollers.

In the control system of the present invention, the first microcontroller and the second microcontroller are connected to each other via a data line, i.e., they are configured and set up to perform a data communication with each other. Particularly, µC1 is configured to transmit and receive signals from/to µC2 and µC2 is configured to transmit and receive signals from/to µC1. The data line thus enables data communication between µC1 and µC2. Particularly preferred, the data line allows for analogue or digital data communication.

The control system of the invention is configured to operate in a first operation mode, wherein the control operations of µC1 and µC2 are synchronized via the data line in order to commonly control the N single phase DCDC converters. Hence, in the first operation mode the N single phase DCDC converters are operated as an N-phase DCDC converter, wherein synchronization between the first and second microcontroller, i.e., between the first and second fraction of single phase DCDC converters, particularly a phase synchronization, is carried out utilizing the data line between the first and the second microcontroller.

The control system of the present invention is further configured to operate in a second operation mode, wherein µC1 autonomously controls the first fraction N₁ of single phase DCDC converters and µC2 autonomously controls the second fraction N₂ of single phase DCDC converters. In other words, in the second operation mode µC1 and µC2 control their respective fractions of single phase DCDC converters individually from each other, i.e., without synchronization, particularly without a phase synchronization, between µC1 and µC2.

The control system of the present invention thus advantageously provides an improved redundancy, particularly for the second operation mode of the control system. That is, the control system of the invention is operated in the first operation mode and the N-phase DCDC converter is fully functional, i.e., not in fault state. In other words, the N-phase DCDC converter operates to its full performance, i.e., outputting an output voltage V_{O} based on an input voltage V_{I} converted by the common operation of all N single phase DCDC converters with minimal ripple current. The merits and advantages of using an N-phase DCDC converter (i.e., multi phase converter), such as e.g., improved adaptiveness to the power demands of a connected load, as well known to the person skilled in the art, are thus achieved by the control system of the invention in the first operation mode thereof.

However, as soon as a fault occurs in the control system, as described in more detail below, the control system becomes operated in the second operation mode. Therein, no synchronization is carried out between the first and second microcontrollers and hence, the first and second fractions of DCDC converters. In other words, in the second operation mode the first fraction of N₁ single phase DCDC converters is operated as a multi phase DCDC converter individually of the second fraction of N₂ single phase DCDC converters operated as another multi phase DCDC converter. Therein, each of these individual multi phase DCDC converters still converts the input voltage V_{I} into a respective output voltage V_{O1} or V_{O2}, each with reduced ripple current. However, due to the reduced amount of single phase DCDC converters, the maximum power output of the fractions N₁ and N₂ might be reduced.

According to a particularly preferred embodiment, the first fraction comprises N₁ = N/2 single phase DCDC converters and the second fraction comprises N₂=N/2 single phase DCDC converters. In this particularly preferred embodiment, in the first operation mode of the control system, the output voltage V_{O} of the N-phase DCDC converter may equal a voltage V₁ leading to a power output P₁. Then, in the second operation mode of the control system, the output voltages V_{O1}, V_{O2} of the multi phase DCDC converters formed by the first and second fraction N₁, N₂, respectively, (at least the output voltage of the remaining functional fraction N₁ or N₂) may lead to a power output of P₁/2, (respectively).

According to a further preferred embodiment, each of the single phase DCDC converters comprises a pair of switches. Further preferred, each of the single phase DCDC converters further comprises an inductance. A capacitance is preferably provided either on the level of the individual single phase DCDC converters and/or on the level of the N-phase DCDC converter. According to a particularly preferred embodiment, each of the single phase DCDC converters is configured as a buck converter. Hence, the N-phase DCDC converter formed by the N single phase DCDC converters operating collectively (as well as the N₁/N₂-phase DCDC converter formed by the first and second fraction N₁/N₂ of single phase DCDC converters operating collectively, respectively) is configured as a multi phase buck converter.

Multi phase buck converters, particularly their setup and operation, are known to the person skilled in the art. A detailed description of multi phase buck converters can be found in *Multiphase Buck Design From Start to Finish (Part 1)*, Application Report from Texas Instruments, *SLVA882,* published April 2017, the whole content of which is incorporated herein by reference. More information on the advantages related to the use of multi phase buck converters can be found in *Merits of multiphase buck DC*/*DC converters in small form factor applications,* Texas Instrument (Kae Wong, David Evans), published in 2015, the whole content of which is incorporated herein by reference. Particularly preferred, the at least two switches per single phase DCDC converter are realized by transistors, e.g., as MOSFET switches. Further preferred, the single phase DCDC converters are operated as push-pull converters, e.g., as a half bridge, allowing for up and down conversion of the input voltage.

As described in more detail in the publications mentioned above, during the first operation mode, wherein the N single phase DCDC converters are operated collectively as an N-phase DCDC converter, all of the single phase DCDC converters operate sequentially. In other words, each of the individual DCDC converters is switched on at an interval Tᵢ with Tᵢ=360°/N during a switching period of the N-phase DCDC converter. Therein, the individual intervals Tᵢ preferably do not overlap with each other. During the second operation mode, the phases of the N₁ single phase converters of the multi phase converter formed by the first fraction are sequentially and/or the phases of the N₂ single phase converters of the multi phase converter formed by the second fraction are sequentially. Particularly preferred, in the second operation mode solely one of the first and second fraction is active, e.g., with the phases of the constituting N₁/N₂ single phase DCDC converters being sequential. Alternatively, in the first operation mode the single phase converters of the multi phase converter formed by the first fraction are sequentially and the phases of the single phase converters of the multi phase converter formed by the second fraction are sequential, and the phases of the first and second fraction being synchronized. Thus, a higher output voltage V_{O} is obtained in the first operation mode but with higher ripple current than that of the full N-phase DCDC converter.

According to another preferred embodiment, the control system of the present invention is further configured to switch from the first operation mode to the second operation mode in response to a fault communication between µC1 and µC2. In other words, the communication between the microcontrollers might be regularly checked, e.g., based on signal timing, on check sums, on CRC, or the like. Exemplarily, a fault communication may be detected when no signals are received by µC1 or µC2 for more than a predetermined time period. Also preferred, the communication between µC1 and µC2 might comprise a common clock signal and/or the number of functional single phase DCDC converters in the first or second fraction, respectively. A fault communication may be detected based on communication content, e.g., based on an erroneous clock signal or based on a number of non-functioning single phase DCDC converters in one fraction exceeding a threshold. Preferably, each microcontroller µC1 and µC2 performs regular self control operations and outputs a fault signal, in case of detecting an internal fault state. Then, a fault communication may be detected via receiving, by µC1 or µC2, a fault signal from µC2 or µC1, respectively. Further preferred, the control operation for one or both microcontrollers are performed by another unit, e.g. a system basis chip connected to the microcontroller(s). Also preferred, µC1 is configured to perform a control operation on µC2 and/or µC2 is configured to perform a control operation on µC1.

According to a further preferred embodiment, an output of the first fraction is controlled by a first output switch and an output of the second fraction is controlled by a second output switch. In other words, an output voltage of the N₁-phase DCDC converter is provided to an external node of the control system depending on a switching state of the first output switch. Also, an output voltage of the N₂-phase DCDC converter is provided to an external node of the control system depending on a switching state of the second output switch. In other words, the output of each of the first and second fraction can be disconnected from a downstream component of the control system, e.g., in case of a detected fault of the fraction.

Particularly preferred, the first and the second output switch is controlled by the second and first microcontroller, respectively. In other words, µC₁ is configured to set the conductivity of the second output switch and µC2 is configured to set the conductivity of the first output switch. Further preferred, µC1 is configured to set the second output switch non-conductive in response to receiving a fault signal from µC2 and/or µC2 is configured to set the first output switch non-conductive in response to receiving a fault signal from µC1. Hence, once one of the microcontrollers detects a fault state of the respective other microcontroller it can disconnect the DCDC converters controlled by this microcontroller from downstream loads.

Additionally or alternatively, the control system of the invention is further configured to switch from the first operation mode to the second operation mode in response to a fault output of at least one single phase DCDC converter. In other words, the control system is further configured to switch from the first operation mode to the second operation mode in response to a fault output of one of the first fraction and the second fraction of DCDC converters. Therein, the output of the DCDC converters is preferably compared to a reference voltage and based on whether a difference between the actual output and the threshold voltage exceeds a predefined threshold a fault state of the respective DCDC converter(s) is detected. According to this embodiment, the functionality of the control system is thus not checked on the control level but on the output level and hence additional redundancy is provided.

Particularly preferred, the control system comprises one or more shunt resistances configured for detecting the output voltage of at least one single phase DCDC converter. Particularly preferred, the microcontrollers µC1 and/or µC2 are configured for receiving (i.e., reading) the detected output voltage(s). Therein, µC1 is preferably configured to detect (read) the output voltage of at least one DCDC converter of the second fraction and µC2 is preferably configured to detect (read) the output voltage of at least one DCDC converter of the first fraction. The microcontroller µC1/µC2 are further configured to detect a fault state of the second fraction (µC2)/first fraction (µC1) based on these readings, respectively. Further, the microcontrollers µC1/µC2 are preferably configured to set the second output switch/first output switch non-conductive in response to detecting such fault state as set forth above.

In a preferred embodiment of the control system of the invention, at least one of µC1 and µC2 is further configured to perform at least one control function with respect to the battery system. In the context of the present disclosure, the at least one control function preferably comprises measurements of cell voltages, cell currents, cell resistances or cell capacities. Further preferred, the control functions also comprise the active or passive balancing of cell voltages or cell currents of a plurality of battery cells. Further preferred, the control system hence further comprises means for detecting a voltage of at least one battery cell, and/or the means for balancing the voltages of a plurality of battery cells. Further preferred, µC1 and/or µC2 is/are configured as one of a battery management system, BMS, battery system manager, BSM, or cell supervision circuit, CSC. In an also preferred embodiment, only one of µC1 and µC2 is configured to perform one of these control functions, in order to simplify the setup and to reduce the component costs for the control system and the battery system.

According to a further preferred embodiment, the first microcontroller µC₁ is connected to the first fraction via a first gate driver stage and the second microcontroller µC₂ is connected to the second fraction via a second gate driver stage. In other words, each of the microcontrollers is connected to its respective DCDC converters via its own gate driver stage. Eventually, an error can also occur on the gate driver stage level. Hence, utilizing solely a single gate driver stage could eventually impede the desired redundancy of DCDC operations and it is hence advantageous to provide individual gate driver stages for the individual microcontrollers in order to provide maximum redundancy. By detecting a fault state on the control level as well as on the output level of the control system as described above, also an error of the gate driver stage level can be reliably detected, e.g., on the output level.

The electronic or electric devices and/or any other relevant devices or components according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may comprise metallization, e.g. surface metallizations and/or pins, and/or may comprise conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media, e.g. a CD, flash drive, or the like.

Also, a person of skill in the art should recognize that the functionality of various computing devices may be combined or integrated into a single computing device, or the functionality of a particular computing device may be distributed across one or more other computing devices without departing from the scope of the embodiments of the present invention.

Another aspect of the present invention relates to a battery system for an electric vehicle, particularly a high voltage battery system for motor driving of an electric vehicle. The battery system of the invention preferably comprises a battery cell stack configured for providing a first operation voltage to a first output node. Therein, the first operation voltage preferably is a high voltage required for motor driving of an electric vehicle. The battery system of the present invention further comprises the control system according to the present invention as described above. Therein, the first operation voltage provided by the battery cell stack is preferably provided to the N-phase DCDC converter as an input voltage. Preferably, the first operation voltage is provided as an input voltage to the first fraction of DCDC converters as well as to the second fraction of DCDC converters. Particularly preferred, the first operation voltage is provided as an input voltage to each of the N single phase DCDC converters. In the battery system of the invention an output voltage of the N-phase DCDC converter is provided to a second output node. Preferably, an output voltage of the first fraction of DCDC converters is provided to the second output node and an output voltage of the second fraction of DCDC converters is provided to the second output node. Further preferred, an output voltage of each of the single phase DCDC converters is provided to the second output node.

In the battery system of the present invention, a voltage is provided to the second output node in a reliable manner. Particularly, an output voltage is provided to the second output node even if a malfunction occurs in part of the N single phase DCDC converters, as improved redundancy is provided. Improved redundancy on the control level is provide the first microcontroller and the second microcontroller communicating with each other via the data line- Further, improved redundancy is provided on level of the DCDC converters by providing the first fraction N₁ of single phase DCDC converters and the second fraction N₂ of single phase DCDC converters. In other words, by utilizing the control system of the invention, the advantages described above are realized in the battery system of the invention.

In a preferred embodiment of the battery system, the first fraction N₁=N/2 and the second fraction N₂=N/2 and further, during operation of the battery system, in the first operation mode of the control system a power output P₁ applies to the second output node and in the second operation mode of the control system a power output P₂=P₁/2 applies to the second output node. However, as set forth above with respect to the control system above, also other fractions of single phase DCDC converters can be realized as well as can be more than two fractions.

A particularly preferred embodiment of the battery system of the invention further comprises a switching unit that is interconnected between the battery cell stack and the first output node as well as the N-phase DCDC converter. Particularly, the switching unit comprises a first unit switch that is interconnected between the battery cell stack and the first output node, wherein the first unit switch can set a path between the battery cell stack and the first output node to be either conductive or non-conductive. The switching unit further comprises a second unit switch that is interconnected between the battery cell stack and the N-phase DCDC converter, particularly an input node of the N-phase DCDC converter, wherein the second unit switch can set a path between the battery cell stack and the N-phase DCDC converter to be either conductive or non-conductive. The switching unit finally comprises a third unit switch that is interconnected between the first output node and the N-phase DCDC converter, particularly an input node of the N-phase DCDC converter, wherein the third unit switch can set a path between the first output node and N-phase DCDC converter to be either conductive or non-conductive. The switching unit advantageously increases the operative safety of the battery system as it allows disconnecting the battery cell stack from any loads connected thereto, either connected via the first output node or the DCDC and the second output node. Above that the switching unit provides further advantages in that it increases the liberty of the user in using the DCDC converter as a push pull converter in different ways.

In a particularly preferred embodiment of the battery system, a starter generator is connected to the first output node and a low voltage battery is connected to the second output node. Therein, the starter generator may be used to charge the battery cell stack if the vehicle is a hybrid vehicle and is operated partially on fossil fuels. Further, the low voltage battery may be a lead acid battery as often utilized in prior art vehicles. Hence, there is a direct conductive connection between the battery cell stack and the starter generator, i.e., via the first unit switch, and two indirect connections between the battery cell stack and the low voltage battery, i.e., via the N₁-phase DCDC converter and the N₂-phase DCDC converter, as well as at least one indirect connection between the starter generator and the low voltage battery via at least one of these aforementioned DCDC converters. These directed and indirect electric connections allow for different operation modes of the battery system as described below.

By setting the first unit switch non-conductive and the second unit switch conductive, the low voltage battery is charged by the battery cell stack. By setting the first unit switch non-conductive and the third unit switch conductive, the low voltage battery is charged by the starter generator. In other words, the low voltage battery system can be powered by the battery cell stack and/or the starter generator via the N-phase DCDC generator (first operation mode) or via one of the first and second fraction of DCDC converters (second operation mode). Therein, powering the low voltage battery system may also comprise directly powering the low voltage battery system, i.e., a LV load, with the low voltage battery operating as a buffer. Further, by setting the first unit switch and the second unit switch non-conductive and the third unit switch conductive, the low voltage battery powers a high voltage load connected to the first output node. In other words, even a load connected to the high voltage board net can be operated by the low voltage battery for a limited time via the DCDC.

Another aspect of the invention relates to a vehicle with a battery system according to the invention as described above, i.e., with a control system of the invention as described above. Preferably, the vehicle further comprises a starter generator that is interconnected between the first output node and a ground node of the battery system. The vehicle further preferably comprises a high voltage board net interconnected between the first output node and the ground node. At least one high voltage load may be connected to the high voltage board net and can be powered directly by the starter generator or the battery cell stack. Further, the vehicle comprises a low voltage battery interconnected between the second output node and a ground node of the battery system. At least one low voltage load may be connected to the low voltage board net and can be powered directly by the low voltage battery or via the DCDC converter(s) Preferably, the high voltage board net operates at an operation voltage of about 48 V and the low voltage board net operates at an operation voltage of about 12 V.

Further aspects of the present invention are disclosed in the dependent claims or the following description of the drawings.

### Brief Description of the Drawings

Features will become apparent to those of ordinary skill in the art by describing in detail exemplary embodiments with reference to the attached drawings in which:
- Figure 1: illustrates a schematic drawing of a battery system with a control system according to a first embodiment;
- Figure 2: illustrates a schematic drawing of a battery system with a control system according to a second embodiment;
- Figure 3: illustrates a schematic drawing of a battery system with a control system according to a third embodiment; and
- Figure 4: illustrates the switching unit of the battery system according to an embodiment in (A) a first configuration, (B) a second configuration and (C) a third configuration.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art.

Accordingly, processes, elements, and techniques that are not considered necessary to those having ordinary skill in the art for a complete understanding of the aspects and features of the present invention may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention." In the following description of embodiments of the present invention, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

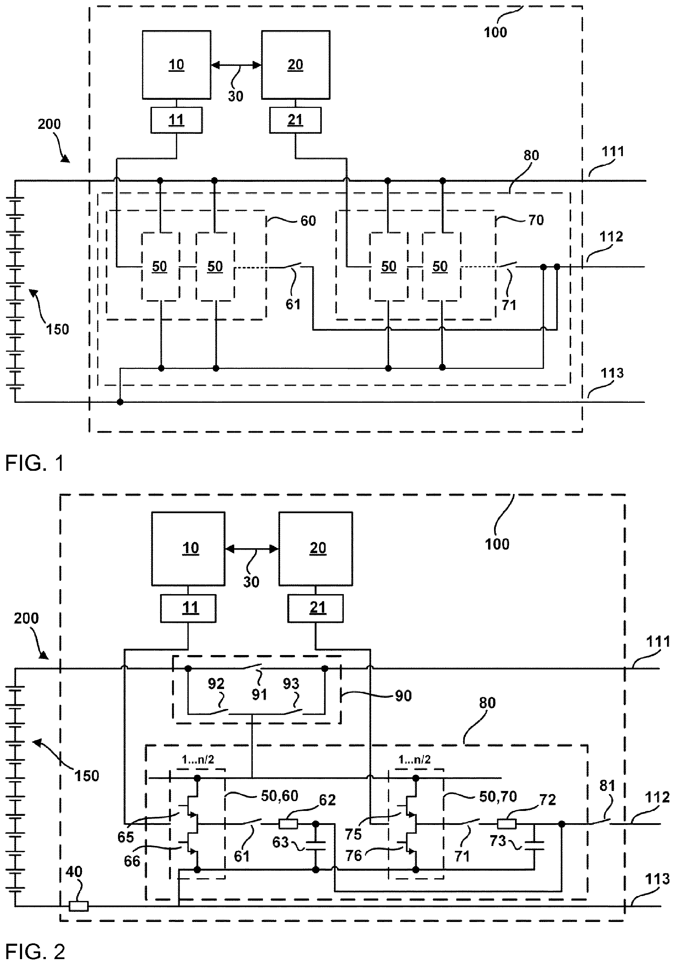

Figure 1 schematically illustrates a drawing of a battery system 200, e.g., of an electric vehicle, with a control system 100 according to a first embodiment of the invention. The battery system 200 comprises a battery cell stack 150 comprising a plurality of battery cells interconnected in series and/or in parallel between a first stack node and a second stack node. The first stack node is connected to a first output node 111 of the battery system 200 and the second stack node is connected to a ground node 113 of the battery system 200.

An N phase DCDC converter 80 is interconnected between the battery cell stack 150 and the nodes 111, 113 and comprises a plurality of N single phase DCDC converters 50. Each of these single phase DCDC converters 50 comprises a first input node connected to the first stack node and a second input node connected to the second stack node, respectively. Each of the single phase DCDC converters 50 comprises an output node that is connected to a second output node 112 of the battery system 200 via one of a first output switch 61 and a second output switch 71. The N single phase DCDC converters 50 are divided into a first fraction 60 and into a second fraction 70 of single phase DCDC converters 50. The first fraction N₁ 60 of single phase DCDC converters 50 are connected to the second output node 112 via the first output switch 61 and the second fraction N₂ 70 of single phase DCDC converter 50 are connected to the second output node 112 via the second output switch 71.

The first fraction 60 of single phase DCDC converters 50 is controlled by a first microcontroller 10 via a first gate driver stage 11. The second fraction 70 of single phase DCDC converters 50 is controlled by a second microcontroller 20 via a second gate driver stage 21. The first microcontroller 10 and the second microcontroller 20 are connected to each other and in data communication with each other via data line 30. The data line is configured to allow for digital or analogue data communication between µC1 and µC2.

In a first operation mode of the control system 100, the operative performance of the first and second microcontrollers 10, 20 are synchronized via the data line 30 and the two microcontrollers 10, 20 function together for commonly controlling the N single phase DCDC converters 50 to form the N-phase DCDC converter 80. An output voltage Vₒ with minimal ripple current is thus generated from the input voltage V_{I} provided by battery cell stack 150.

In a second operation mode of the control system 100, the first microcontroller 10 and the second microcontroller 20 operate autonomously, i.e., individually from each other, without being synchronized via data line 30. Then, the first microcontroller 10 commonly controls the N₁ single phase DCDC converters 50 of the first fraction 60 to operate as an N₁-phase DCDC converter and the second microcontroller 20 commonly controls the N₂ single phase DCDC converters 50 of the second fraction 70 to operate as a N₂-phase DCDC converter. However, in the second operation mode, mostly one of the first and second fraction 60, 70 of DCDC converters 50 is not operated at all due to a fault state of one of the first and second microcontrollers 10, 20, a fault state in one of the first and second gate driver stages 11, 21 or a fault in one of the first and second fractions 60, 70 of the single phase DCDC converters 50. Hence, redundancy of DCDC converter operation is reliably provided in battery system 200.

Figure 2 shows a schematic drawing of a battery system 200 with a control system 100 according to a second embodiment. Insofar the battery system 200 is similar to that of Figure 1 same elements are denoted by same reference numbers and a repeated description is omitted. In the control system 100 as shown in Figure 2, only one single phase DCDC converter 50, 60 is shown for the first fraction 60 and second fraction 70 of the DCDC converters, respectively. Each of these single phase DCDC converters 50 comprises a pair of MOSFET switches 65, 66, 75, 76 and is thus realized as push-pull-converter. The first fraction 60 of DCDC converters 50 is connected via a shared first output switch 61, first output inductance 62, and first output capacitance 63 to a second output node 112 of the control system 100. The second fraction 70 of DCDC converters 50 is connected via shared second output switch 71, second output inductance 72, and second output capacitance 73 to the second output node 112. Hence, each of the first and second fraction 60, 70 of DCDC converters 50 is easily disconnected from the second output node 112 by setting the respective output switch 61, 71 non-conductive. Further, the N-phase DCDC converter 80 formed by the combination of first and second fraction 60, 70 of DCDC converters 50 is connected to second output node 112 via a main output switch 81. Hence, the N-phase DCDC converter 80 as a whole is easily disconnected from the second output node 112. The first output switch 61 is controlled at least by the second microcontroller 20, the second output switch 71 is controlled at least by the first microcontroller 10 and the main output switch 81 is controlled by one or both of the microcontrollers 10, 20.

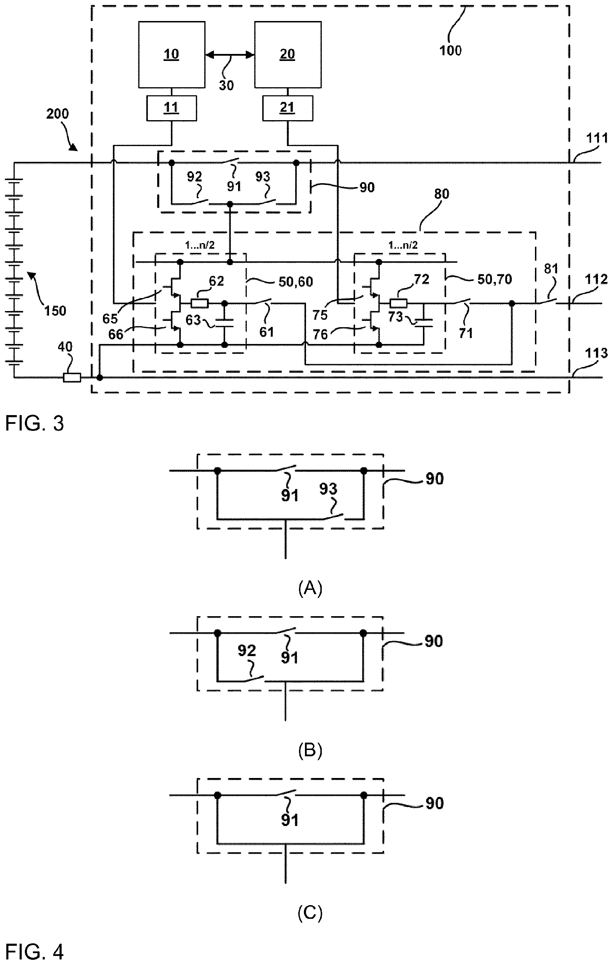

Figure 3 illustrates a schematic drawing of a battery system 200 with a control system 100 according to a third embodiment. Insofar it is similar to that of Figures 1 and 2, same elements are denoted by same reference numbers and a repeated description is omitted.

In the control system 100 as shown in Figure 3, each of the single phase DCDC converters 50 of the first fraction 60 comprises an inductance 62 and a capacitor 63 and each of the single phase DCDC converters 50 of the second fraction 70 comprises an inductance 72 and a capacitor 73. Each of these single phase DCDC converters 50 further comprises the pair of MOSFET switches 65, 66, 75, 76 and is thus realized as buck type push-pull-converter.

Figure 4 illustrates the switching unit 90 of a battery system 200 according to the second and/or the third embodiment as illustrated in Figures 2 and 3. The switching unit 90 is illustrated in different configurations, each of which can be applied to a battery system 200.

According to a first configuration as shown in Figure 4(A), the second unit switch 92 is set conductive, while the first unit switch 91 and the third unit switch 93 are set non-conductive. In this configuration, the first output voltage of battery cell stack 150 is provided to an input voltage to each of the N single phase DCDC converters as shown in Figures 2 and 3, i.e., to the N-phase DCDC converter 80 (first operation mode) or the first and/or second fraction of DCDC converters, i.e., N₁-phase DCDC converter 60 or N₂-phase DCDC converter 70. In other words, a first power path is provided from the battery cell stack 150 to the second output node 112 via the right bridge, i.e., second fraction 70 of DCDC converters 50, and via second output switch 71. The second output switch 71 allows to separate the right bridge 70 from the left bridge 60, i.e. the first fraction 60 N₁ of DCDC converters 50.

According to a second configuration as shown in Figure 4(B), the third unit switch 93 is set conductive, while the first unit switch 91 and the second unit switch 92 are set non-conductive. In this configuration, a high voltage load in the high voltage board net that spans between the first output node 111 and the ground node 113 is powered via a low voltage battery (not shown) interconnected between the ground node 113 and the second output node 112. Therein, the high voltage is converted to a high voltage via the N-phase DCDC converter 80, via the N₁-phase DCDC converter 60 and/or the N₂-phase DCDC converter 70. With this configuration, the ASIL B availability is met on the HV domain additionally or alternatively to the LV domain. Hence, the second configuration might be used, e.g., if the critical control units, e.g., for autonomous driving or X by wire, are powered by HV domain.

According to a third configuration as shown in Figure 4(C), the first unit switch 91 is set non-conductive, while the second unit switch 92 and the third unit switch 93 are set conductive. According to this configuration, the low voltage battery (not shown) interconnected between the second output node 112 and the ground node 113 is charged by the battery cell stack 150 and a high voltage battery (not shown) interconnected between the first output node 111 and the ground node 113. Hence, according to this configuration redundancy in operating loads connected to the LV board net is provided by utilizing the stack 150 and the HV board net.

### Reference signs

- 10: first microcontroller µC₁
- 11: first gate driver stage
- 20: second microcontroller µC₂
- 21: second gate driver stage
- 30: data line
- 40: shunt resistor
- 50: single phase DCDC converter
- 60: first fraction of DCDC converters
- 61: first output switch
- 62: first output inductance
- 63: first output capacitance
- 65: first MOSFET switch
- 66: second MOSFET switch
- 70: second fraction of DCDC converters
- 71: second output switch
- 72: second output inductance
- 73: second output capacitance
- 75: first MOSFET switch
- 76: second MOSFET switch
- 80: N-phase DCDC converter
- 81: main output switch
- 90: switch unit
- 91: first unit switch
- 92: second unit switch
- 93: third unit switch
- 100: control system
- 111: first output node
- 112: second output node
- 113: ground node
- 150: battery cell stack
- 200: battery system

## Claims

1. Control system (100) for a battery system (200) with a battery cell stack (150) having a plurality of battery cells interconnected between a first stack node and a second stack node, the control system (100) comprising
an N-phase DCDC converter (80) with N single phase DCDC converters (50), each single phase DCDC converter comprising a first input node connected to the first stack node and a second input node connected to the second stack node;
a first microcontroller (10), µC₁, configured to control a first fraction (60) of the N single phase DCDC converters (50); and
a second microcontroller (20), µC₂, configured to control the remaining second fraction (70) of the N single phase DCDC converters (50) and being connected to µC₁ (10) via a data line (30),
wherein the control system (100) is configured to:
operate in a first operation mode, wherein the control operations of µC₁ (10) and µC₂ (20) are synchronized via the data line (30) for commonly controlling the N single phase DCDC converters (50), and
operate in second operation mode, wherein µC₁ (10) autonomously controls the first fraction (50) and µC₂ (20) autonomously controls the second fraction (70).

2. Control system (100) according to claim 1, wherein the first fraction (60) comprises N/2 single phase DCDC converters (50) and wherein the second fraction (70) comprises N/2 single phase DCDC converters (50).

3. Control system (100) according to claim 1 or 2, wherein each of the single phase DCDC converters (50) comprises a pair of switches (51, 52).

4. Control system (100) according to one of the preceding claims, wherein in the first operation mode all of the N single phase DCDC converters (50) operate sequentially.

5. Control system (100) according to any one of the preceding claims, further configured to switch from the first operation mode to the second operation mode in response to an fault communication between µC₁ (10) and µC₂ (20).

6. Control system (100) according to any one of the preceding claims, further configured to switch from the first operation mode to the second operation mode in response to a fault output of at least one single phase DCDC converter (50).

7. Control system (100) according to any one of the preceding claims, wherein an output of the first fraction (60) is controlled by a first output switch (61) and wherein an output of the second fraction (70) is controlled by a second output switch (71).

8. Control system (100) according to claim 7, wherein µC₁ (10) is configured to set the second output switch (61) non-conductive in response to detect a fault state from µC₂ (20) and/or wherein µC₂ (20) is configured to set the first output switch (61) non-conductive in response to detect a fault state from µC₁ (10)

9. Control system (100) according to any one of the preceding claims, wherein one of µC1 (10) and µC2 (20) is further configured to perform at least one control function with respect to the battery system (200).

10. Control system (100) according to any one of the preceding claims, wherein µC₁ (10) is connected to the first fraction (60) via a first gate driver stage (11) and µC₂ (20) is connected to the second fraction (70) via a second gate driver stage (12).

11. Battery system (200) for an electric vehicle, comprising
a battery cell stack (150) comprising a plurality of battery cells interconnected between a first stack node and a second stack node and configured for providing a first operation voltage to a first output node (111); and
the control system (100) according to any one of the claims 1 to 10,
wherein the first operation voltage is provided as an input voltage to the N-phase DCDC converter (80), and
wherein an output voltage of the N-phase DCDC converter (80) is provided to a second output node (112).

12. Battery system (200) according to claim 11, wherein in the first operation mode of the control system (100) a power output P₁ applies to the second output node (112) and wherein in the second operation mode of the control system (100) a power output P₂=P₁/2 applies to the second output node (112).

13. Battery system (200) according to claim 11 or 12, further comprising a switching unit (90) with a first unit switch (91) interconnected between the battery cell stack (150) and the first output node (111), a second unit switch (92) interconnected between the battery cell stack (150) and the N-phase DCDC converter (50), and a third unit switch (93) interconnected between the first output node (111) and the N-phase DCDC converter (50).

14. Battery system (200) according to claim 13,
wherein a high voltage, HV, board net is connected to the first output node (111) and a low voltage, LV, board net is connected to the second output node (112),
wherein by setting the first unit switch (91) non-conductive and the second unit switch (92) and/or the third unit switch (93) conductive, the LV board net is powered by the battery cell stack (150) and/or the HV board net, and
wherein by setting the first unit switch (91) and the second unit switch (92) non-conductive and the third unit switch (93) conductive, the HV board net is powered by the LV board net.

15. Vehicle with a battery system (100) according to any one of claims 11 to 14.

## Patentansprüche

1. Steuerungssystem (100) für ein Batteriesystem (200) mit einem Batteriezellenstapel (150), der mehrere Batteriezellen aufweist, die zwischen einem ersten Stapelknoten und einem zweiten Stapelknoten miteinander verbunden sind, das Steuerungssystem (100) umfassend
einen N-Phasen-DCDC-Wandler (80) mit N-Einphasen-DCDC-Wandlern (50), wobei jeder Einphasen-DCDC-Wandler einen mit dem ersten Stapelknoten verbundenen ersten Eingangsknoten und einen mit dem zweiten Stapelknoten verbundenen zweiten Eingangsknoten umfasst;
einen ersten Mikrocontroller (10), µC₁, der so konfiguriert ist, dass er einen ersten Teil (60) der N Einphasen-DCDC-Wandler (50) steuert; und
einen zweiten Mikrocontroller (20), µC₂, der so konfiguriert ist, dass er den verbleibenden zweiten Teil (70) der N Einphasen-DCDC-Wandler (50) steuert und über eine Datenleitung (30) mit µC₁ (10) verbunden ist,
wobei das Steuerungssystem (100) konfiguriert ist zum:
Betreiben in einer ersten Betriebsart, wobei die Steuervorgänge von µC₁ (10) und µC₂ (20) über die Datenleitung (30) synchronisiert werden, um die N-Einphasen-DCDC-Wandler (50) gemeinsam zu steuern, und
Betreiben in einer zweiten Betriebsart, wobei µC₁ (10) autonom den ersten Teil (50) und µC₂ (20) autonom den zweiten Teil (70) steuert.

2. Steuerungssystem (100) nach Anspruch 1, wobei der erste Teil (60) N/2-Einphasen-DCDC-Wandler (50) umfasst und wobei der zweite Teil (70) N/2-Einphasen-DCDC-Wandler (50) umfasst.

3. Steuerungssystem (100) nach Anspruch 1 oder 2, wobei jeder der Einphasen-DCDC-Wandler (50) ein Paar von Schaltern (51, 52) umfasst.

4. Steuerungssystem (100) nach einem der vorhergehenden Ansprüche, wobei in der ersten Betriebsart alle N-Einphasen-DCDC-Wandler (50) sequentiell betrieben werden.

5. Steuerungssystem (100) nach einem der vorhergehenden Ansprüche, ferner so konfiguriert, dass es als Reaktion auf eine Fehlerkommunikation zwischen µC₁ (10) und µC₂ (20) von der ersten Betriebsart in die zweite Betriebsart umschaltet.

6. Steuerungssystem (100) nach einem der vorhergehenden Ansprüche, ferner so konfiguriert, dass es als Reaktion auf einen Fehlerausgang mindestens eines Einphasen-DCDC-Wandlers (50) von der ersten Betriebsart in die zweite Betriebsart umschaltet.

7. Steuerungssystem (100) nach einem der vorhergehenden Ansprüche, wobei eine Ausgabe des ersten Teils (60) durch einen ersten Ausgangsschalter (61) gesteuert wird und wobei ein Ausgang des zweiten Teils (70) durch einen zweiten Ausgangsschalter (71) gesteuert wird.

8. Steuerungssystem (100) nach Anspruch 7, wobei µC₁ (10) so konfiguriert ist, dass es den zweiten Ausgangsschalter (61) als Reaktion auf das Erfassen eines Fehlerzustands von µC₂ (20) nicht leitend setzt, und/oder wobei µC₂ (20) so konfiguriert ist, dass es den ersten Ausgangsschalter (61) als Reaktion auf die Erfassung eines Fehlerzustands von µC₁ (10) nicht leitend setzt.

9. Steuerungssystem (100) nach einem der vorhergehenden Ansprüche, wobei eines von µC₁ (10) und µC₂ (20) ferner so konfiguriert ist, dass es mindestens eine Steuerfunktion in Bezug auf das Batteriesystem (200) ausführt.

10. Steuerungssystem (100) nach einem der vorhergehenden Ansprüche, wobei µC₁ (10) über eine erste Gate-Treiberstufe (11) mit dem ersten Teil (60) und µC₂ (20) über eine zweite Gate-Treiberstufe (12) mit dem zweiten Teil (70) verbunden ist.

11. Batteriesystem (200) für ein Elektrofahrzeug, umfassend
einen Batteriezellenstapel (150), umfassend mehrere Batteriezellen, die zwischen einem ersten Stapelknoten und einem zweiten Stapelknoten miteinander verbunden und so konfiguriert sind, dass sie eine erste Betriebsspannung an einen ersten Ausgangsknoten (111) bereitstellen; und
das Steuerungssystem (100) nach einem der Ansprüche 1 bis 10,
wobei die erste Betriebsspannung als Eingangsspannung für den N-Phasen-DCDC-Wandler (80) bereitgestellt ist, und
wobei eine Ausgangsspannung des N-Phasen-DCDC-Wandlers (80) einem zweiten Ausgangsknoten (112) bereitgestellt ist.

12. Batteriesystem (200) nach Anspruch 11, wobei in der ersten Betriebsart des Steuerungssystems (100) ein Leistungsausgang P₁ an dem zweiten Ausgangsknoten (112) anliegt und wobei in der zweiten Betriebsart des Steuerungssystems (100) ein Leistungsausgang P₂=P₁/2 an dem zweiten Ausgangsknoten (112) anliegt.

13. Batteriesystem (200) nach Anspruch 11 oder 12, ferner umfassend eine Schalteinheit (90) mit einem ersten Einheitsschalter (91), der zwischen den Batteriezellenstapel (150) und den ersten Ausgangsknoten (111) geschaltet ist, einen zweiten Einheitsschalter (92), der zwischen den Batteriezellenstapel (150) und den N-Phasen-DCDC-Wandler (50) geschaltet ist, und einen dritten Einheitsschalter (93), der zwischen den ersten Ausgangsknoten (111) und den N-Phasen-DCDC-Wandler (50) geschaltet ist.

14. Batteriesystem (200) nach Anspruch 13,
wobei ein Hochspannungs-, HV-, -Netz mit dem ersten Ausgangsknoten (111) und ein Niederspannungs-, LV-, -Netz mit dem zweiten Ausgangsknoten (112) verbunden ist,
wobei durch Einstellen des ersten Einheitsschalters (91) auf nicht leitend und des zweiten Einheitsschalters (92) und/oder des dritten Einheitsschalters (93) auf leitend das LV-Netz durch den Batteriezellenstapel (150) und/oder das HV-Netz mit Strom versorgt wird, und
wobei durch Einstellen des ersten Einheitsschalters (91) und des zweiten Einheitsschalters (92) in den nicht leitenden Zustand und des dritten Einheitsschalters (93) in den leitenden Zustand das HV-Netz durch das LV-Netz gespeist wird.

15. Fahrzeug mit einem Batteriesystem (100) nach einem der Ansprüche 11 bis 14.

## Revendications

1. Système de commande (100) pour un système de batterie (200) avec une pile de cellules de batterie (150) ayant une pluralité de cellules de batterie interconnectées entre un premier nœud de pile et un deuxième nœud de pile, le système de commande (100) comprenant
un convertisseur CC-CC à N-phase (80) avec N convertisseurs CC-CC monophasés (50), chaque convertisseur CC-CC monophasé comprenant un premier nœud d'entrée connecté au premier nœud de pile et un deuxième nœud d'entrée connecté au deuxième nœud de pile ;
un premier microcontrôleur, µC₁, (10) configuré pour commander une première fraction (60) des N convertisseurs CC-CC monophasés (50) ; et
un deuxième microcontrôleur, µC₂, (20) configuré pour commander la deuxième fraction (70) restante des N convertisseurs CC-CC monophasés (50) et connecté à µC₁ (10) via une ligne de données (30),
dans lequel le système de commande (100) est configuré pour :
fonctionner dans un premier mode de fonctionnement, dans lequel les opérations de commande de µC₁ (10) et µC₂ (20) sont synchronisées via la ligne de données (30) pour commander en commun les N convertisseurs CC-CC monophasés (50), et
fonctionner dans un deuxième mode de fonctionnement, dans lequel µC₁ (10) commande de manière autonome la première fraction (50) et µC₂ (20) commande de manière autonome la deuxième fraction (70).

2. Système de commande (100) selon la revendication 1, dans lequel la première fraction (60) comprend N/2 convertisseurs CC-CC monophasés (50) et dans lequel la deuxième fraction (70) comprend N/2 convertisseurs CC-CC monophasés (50).

3. Système de commande (100) selon la revendication 1 ou 2, dans lequel chacun des convertisseurs CC-CC monophasés (50) comprend une paire de commutateurs (51, 52).

4. Système de commande (100) selon l'une des revendications précédentes, dans lequel, dans le premier mode de fonctionnement, les N convertisseurs CC-CC monophasés (50) fonctionnent tous de manière séquentielle.

5. Système de commande (100) selon l'une quelconque des revendications précédentes, configuré en outre pour passer du premier mode de fonctionnement au deuxième mode de fonctionnement en réponse à une communication de défaut entre µC₁ (10) et µC₂ (20) .

6. Système de commande (100) selon l'une quelconque des revendications précédentes, configuré en outre pour passer du premier mode de fonctionnement au deuxième mode de fonctionnement en réponse à une sortie de défaut d'au moins un convertisseur CC-CC monophasé (50).

7. Système de commande (100) selon l'une quelconque des revendications précédentes, dans lequel une sortie de la première fraction (60) est commandée par un premier commutateur de sortie (61) et dans lequel une sortie de la deuxième fraction (70) est commandée par un deuxième commutateur de sortie (71).

8. Système de commande (100) selon la revendication 7, dans lequel µC₁ (10) est configuré pour régler le deuxième commutateur de sortie (61) sur non conducteur en réponse à la détection d'un état de défaut dans µC₂ (20) et/ou dans lequel µC₂ (20) est configuré pour régler le premier commutateur de sortie (61) sur non conducteur en réponse à la détection d'un état de défaut dans µC₁ (10)

9. Système de commande (100) selon l'une quelconque des revendications précédentes, dans lequel l'un parmi µC₁ (10) et µC₂ (20) est configuré en outre pour réaliser au moins une fonction de commande par rapport au système de batterie (200).

10. Système de commande (100) selon l'une quelconque des revendications précédentes, dans lequel µC₁ (10) est connecté à la première fraction (60) via un premier étage d'attaque de grille (11), et µC₂ (20) est connecté à la deuxième fraction (70) via un deuxième étage d'attaque de grille (12).

11. Système de batterie (200) pour un véhicule électrique, comprenant
une pile de cellules de batterie (150) comprenant une pluralité de cellules de batterie interconnectées entre un premier nœud de pile et un deuxième nœud de pile et configuré pour appliquer une première tension de fonctionnement à un premier nœud de sortie (111) ; et
le système de commande (100) selon l'une quelconque des revendications 1 à 10,
dans lequel la première tension de fonctionnement est appliquée au convertisseur CC-CC à N-phase (80) sous la forme d'une tension d'entrée, et
dans lequel une tension de sortie du convertisseur CC-CC à N-phase (80) est appliquée à un deuxième nœud de sortie (112).

12. Système de batterie (200) selon la revendication 11, dans lequel, dans le premier mode de fonctionnement du système de commande (100) une puissance de sortie P₁ s'applique au deuxième nœud de sortie (112) et dans lequel, dans le deuxième mode de fonctionnement du système de commande (100), une puissance de sortie P₂ = P₁/2 s'applique au deuxième nœud de sortie (112).

13. Système de batterie (200) selon la revendication 11 ou 12, comprenant en outre une unité de commutation (90) avec un premier commutateur d'unité (91) interconnecté entre la pile de cellules de batterie (150) et le premier nœud de sortie (111), un deuxième commutateur d'unité (92) interconnecté entre la pile de cellules de batterie (150) et le convertisseur CC-CC à N-phases (50), et un troisième commutateur d'unité (93) interconnecté entre le premier nœud de sortie (111) et le convertisseur CC-CC à N-phases (50).

14. Système de batterie (200) selon la revendication 13,
dans lequel un réseau de carte haute tension, HT, est connecté au premier nœud de sortie (111) et un réseau de carte basse tension, LV, est connecté au deuxième nœud de sortie (112),
dans lequel, en réglant le premier commutateur d'unité (91) sur non conducteur et le deuxième commutateur d'unité (92) et/ou le troisième commutateur d'unité (93) sur conducteur, le réseau de carte LV est alimenté par la pile de cellules de batterie (150) et/ou le réseau de carte HV, et
dans lequel, en réglant le premier commutateur d'unité (91) et le deuxième commutateur d'unité (92) sur non conducteur et le troisième commutateur d'unité (93) sur conducteur, le réseau de carte HV est alimenté par le réseau de carte LV.

15. Véhicule avec un système de batterie (100) selon l'une quelconque des revendications 11 à 14.
